# EUROPEAN PATENT SPECIFICATION

(11) **EP 1 560 251 B1**
(45) Date of publication and mention of the grant of the patent: **29.08.2007**
(21) Application number: 05001692.2
(22) Date of filing: 27.01.2005
(51) Int. Cl.: H01J 31/12, H01J 29/02

(54) **Envelope for a flat panel display and flat panel display employing the envelope**
Kolbenteil einer flachen Anzeigevorrichtung
Enveloppe pour un dispositif d'affichage plat

(30) Priority: 29.01.2004 JP 2004021788; 14.10.2004 JP 2004300076
(43) Date of publication of application: 03.08.2005
(73) Proprietor: ASAHI GLASS COMPANY LTD., Tokyo 100-8405 (JP)
(72) Inventor: Sugawawa, Tsunehiko Asahi Glass Company, Ltd., Tokyo (JP); Murakami, Takahiro Asahi Glass Company, Ltd., Tokyo (JP)
(74) Representative: Müller-Boré & Partner Patentanwälte

(56) References cited:
- EP-A- 0 964 424
- US-A- 6 046 541
- US-A1- 2002 185 940
- US-B1- 6 538 380

## Description

The present invention relates to a flat panel type display represented by a field emission display (hereinafter referred to as "FED") having a cold-cathode type emitter, and to an envelope comprising a glass envelope and a support member employed for the display.

In recent years, as a television-broadcasting receiver (hereinafter referred to as "television set"), demand for a flat panel display (hereinafter referred to as "FPD") such as a liquid crystal display (hereinafter referred to as "LCD") or a plasma display (hereinafter referred to as "PDP") has been increasing instead of a television set employing a cathode ray tube. FED is also known as a FPD other than the above LCD and PDP. FED has characteristics that it requires smaller power consumption than PDP, a cathode ray tube (hereinafter referred to as "CRT") or LCD, it achieves higher intensity and high-definition as compared with e.g. LCD, and it achieves a wide view angle and provides good viewability, whereby it is expected to be widely spread for family use.

A FED is an image display device having a very small emitters (cold-cathode type emitter) for every pixel, and an electron beams are emitted from the emitter toward phosphor in vacuum to form an image in the same manner as a CRT. Since FED driving an emitter for each pixel independently, does not require scanning of an electron beams at a wide angle, which is required in CRT, FED has a much smaller depth than a CRT and has a flat image display plane. Refer to JP-A-7-230776 (Patent Document 1, for example.

A conventional FED comprises a front glass in which a plurality of spacers capable of withstanding an atmospheric pressure are disposed as a support structure and as a gap maintaining member and which is coated with phosphor, and a rear glass having emitters for emitting electrons, wherein they are connected each other via a substantially rectangular exterior frame which constitutes a side wall. Namely, the envelope for FED comprises the front glass, the rear glass and the exterior frame, and each of these members are hermetically sealed with a sealing agent. Further, the front glass and the rear glass face each other via a plurality of spacers.

The inner space of the envelope, namely the space between the front glass and the rear glass facing each other, is typically kept at a high-vacuum of from 10⁻³ to 10⁻⁶ Pa. Electrons emitted from emitters on the rear glass collide with phosphor formed on the inner surface of the front glass to cause excitation-emission of the phosphor. As a result, pixels emit color light and an image is formed.

As described above, the inside of the envelope is in a high-vacuum state, and it is necessary to maintain the distance (typically from 1 to 3 mm) between the front glass and the rear glass even when an atmospheric pressure is applied to the envelope from the outside. Therefore, the plurality of spacers are disposed between the front glass and the rear glass as described above. However, in the FED having such structure, the following problems occur due to the presence of the spacers.

The first problem is degradation of image quality such as impurity of displayed color caused by fluctuation of an electron beam emitted from an emitter due to charging-up at the surface of a spacer, or light-emission from phosphor at another location exited by secondary electrons emitted from the spacer.

Further, the spacers serve as a support structure durable to a stress induced by the pressure difference between the inside and outside of the glass envelope. However, it is difficult to construct the envelope so that the pressure is applied evenly to the plurality of spacers, and a concentrated load is applied locally to some spacers in some cases.

The second problem is that if a concentrated load is applied to a spacer, there is a risk of generation of a crack at vicinity of interface between the spacer and the front glass and/or vicinity of the interface between the spacer and the rear glass.

The third problem is that a work of disposing a large number of spacers having an extremely large aspect ratio between the front glass and the rear glass, involves a high degree of technical difficulty. The fourth problem is that since a large number of spacers are employed, the number of parts and the number of assembly steps are increased, which result in a complicated production process and lowering productivity. The fifth problem is that the presence of the large number of spacers in a narrow space causes an increase of evacuation resistance in a step of evacuating the inside of the envelope, which lowers productivity.

As described above, the presence of the spacers between the front glass and the rear glass causes various problems. However, in a case where the spacers are not employed, the front glass and the rear glass are deformed significantly due to the pressure difference between the inside and outside of the envelope, and these glass members are fractured in some cases. Since the inside of the envelope is in a high-vacuum state as described above, a tensile stress exceeding by far the practical strength of a normal glass is generated particularly in the vicinity of an end of a short axis among two axes, which are parallel to the sides of the front glass and are perpendicular to each other (namely, a long axis and a short axis), in the outer surface of the front glass, unless the thickness of the glass is increased to a large degree.

Further, a tensile stress exceeding by far the sealing strength, is generated in a portion where the front glass and the rear glass are directly sealed together, a sealed region between the front glass and the exterior frame, and a sealed region between the rear glass and the exterior frame, unless the width of the sealed regions are increased to a large degree. Therefore, there is a possibility of destruction of the envelope caused by the tensile stress as described above.

The problem of the fracture caused by the tensile stress can be solved by increasing the thicknesses of the front glass and rear glass. However, since the rear glass has emitters disposed on the surface, it is difficult to increase the thickness to a degree of sufficiently lowering the above tensile stress, when easiness of handling in an emitter-arranging step or various restrictions are taken into account.

Further, in a case where the thicknesses of the front glass and rear glass are increased to a degree of making these members durable against the pressure difference, the mass of the envelope itself is increased and the depth of FED is increased at the same time, the thinness as a merit of FED is impaired to a certain extent. In this specification, the depth of a FED or the depth of an envelope for FED, means the depth in the direction of normal line to an image display plane.

Some examples of vacuum envelope structures without employing spacers, employed for a flat panel display device, are disclosed in JP-A-2-239549 (Patent Document 2). Fig. 1 of Patent Document 2 shows an example of vacuum envelope comprising a planar-shaped face glass (corresponding to a front glass), a pressure-resisting envelope having a curved plane provided on its back side, and an exterior envelope bonded to the outside of the pressure-resisting envelope.

Other examples of a vacuum envelope for a flat panel display device without employing spacers, are disclosed in JP-A-5-190121 (Patent Document 3), JP-A-2001-68041 (Patent Document 4), JP-A-2000-231891 (Patent Document 5), JP-A-2000-231892 (Patent Document 6), JP-A-7-220662 (Patent Document 7) and the like.

As shown in Fig. 6 of Patent Document 1, emitters (electron emitting elements: reference numeral 2074 in Patent Document 1) for a FED such as SED (Surface-conduction Electron-emitter Display: a display employing surface-conduction electron-emitters. One type of FED), are provided on a rear glass (electron source substrate: reference numeral 2 of Patent Document 1) together with wires (reference numeral: Dx, Dy in Patent Document 1) and connecting wires (reference numeral: 2075 in Patent Document 1).

However, the vacuum envelope (vacuum chamber) according to Fig. 1 of Patent Document 2 has a structure that an exterior envelope is located outside and a pressure-resisting envelope is located inside to form a rear panel having a curved plane. As a result, there is a problem that when the emitters (cathodes) are disposed on the surface of the rear panel as in the invention described in Patent Document 1, the emitters have to be disposed on the curved plane, whereby the depth is increased as compared with the case where they are disposed on a flat plane, and the production becomes difficult.

Therefore, since it is not possible to dispose emitters directly on the rear panel as shown in Fig. 6 of Patent Document 1, the emitters (cathodes) are provided in a state that they are separated from the rear panel (the vacuum chamber and the exterior envelope) as shown in Fig. 1 of Patent Document 2. As a result, there is a problem that it becomes difficult to lead out wires connected to the emitters to the outside of the envelope.

Further, Fig. 5 of Patent document 2 discloses, as another embodiment of the invention according to Fig. 1, an invention that a front glass (numeral reference 1 of Patent Document 2) and a dome-shaped rear panel (a metal envelope 2 in Patent Document 2) are fusion-bonded with a thermal-fusion-bonding agent (reference numeral 4 in Patent Document 2) and a channel member 5 clamps the front glass and the rear panel. However, even in the case of the vacuum envelope according to Fig. 5 of Patent Document 2, there has been a problem that it is difficult to dispose emitters on the rear panel or to lead out wires connected to the emitters to the outside of the envelope.

Further, in Patent Document 6, Fig. 2 illustrates a structure having a face panel, a rear envelope and a substrate, in which the substrate is sandwiched and supported in the space enclosed by the face panel and the rear envelope. Further, as an example of the application, Fig. 8 of Patent Document 6 discloses a structure of employing a holding pin to support the above substrate. However, in the case of the structure of sandwiching the substrate between the face panel and the rear envelope, it is necessary that the face panel and the substrate are hermetically sealed together, and at the same time, the rear envelope and the substrate are hermetically sealed together, which increases the area for sealing. Further, the sealing has to be made so that the end of the face panel and the end of the rear envelope are substantially opposed to each other. Therefore, the reliability of the sealing portion tends to be impaired. However, Patent Document 6 does not disclose specific means for reducing the stress in the sealing portion. Further, in the case of the structure of supporting a substrate with holding pins, there is also a problem that handling of conductors connected to the emitters becomes difficult.

In Patent Document 7, Fig. 2 discloses a flat panel display comprising a front panel having a convex plane at the atmosphere side, a rear panel, a side panel and a supporting panel. The supporting panel is to apply a compressive force in an in-plane direction of the panel according to Claim 1 of Patent Document 7.

Further, the Patent Document 7 discloses a function of canceling a force generated by depressurizing the inside, which is obtained by forming a convex plane at an atmosphere side of the panel, and applying a compressive force along the panel plane from an end of the panel whereby a force for inflating the panel toward the atmospheric pressure side is generated at the center of the panel. However, in a case where the convex plane formed in the atmosphere-side surface of the panel is insufficient, the effect of canceling the tensile stress generated at the end of the panel becomes extremely small, or on the contrary, a concave is formed toward the depressurized inside, which causes an increased tensile stress as an adverse effect. Namely, in order to obtain a sufficient effect by the above function, the curvature radius of the convex plane has to be made further small.

However, if the curvature radius is made small, the panel is not flat any more and the image display portion is changed from "flat plane type" to "curved plane type" and the original characteristic of flat panel display is impaired and a problem such as viewability occurs. In case of obtaining flatness in a practical sense while the curvature radius of the image display portion remains large to solve the above-mentioned problem of the concave, the glass has to be made thick, which causes a problem of increasing the mass.

In addition, with the structure of Fig. 2 of Patent Document 7, a moment is generated around a contact point between the front panel and the side plate or around a contact point between the rear panel and the side plate. In this structure, however, since a compressive force by the supporting plate is applied only in one direction (in-plane direction), the restriction of this moment is insufficient and a tensile stress at the sealing portion can not be sufficiently reduced. Further, paragraph 0009 of Patent Document 7 describes a reinforcement applied on the atmosphere side of the rear panel to keep the rigidity of the entire unit. However, the reinforcement is employed only for the purpose of increasing the rigidity of the rear panel, and it does not contribute to reduce the tensile stress generated at the sealing portion. As a result, there is a possibility of destruction of the sealing portion. However, Patent Document 7 does not disclose any specific solution of this problem.

US 2002/0185940 A1 discloses a flat display case assembly in which a flat display module and a frame for holding the module are fastened by a case assembly comprising a front and a rear case.

EP 0 964 424 A1 discloses a frameless case for a flat display comprising a hermetically evacuated case.

In order to solve the above-mentioned various problems caused by the spacers, the present invention provides, an envelope according to claim 1, that can be employed for a FPD such as a FED, having a structure without using a spacer (hereinafter referred to as "spacerless structure"). Incidentally, it is also an object to prevent increase of the mass due to increase of the thickness of glass in the spacerless structure. Further, it is a second object of the present invention to provide a structure in which conductors connected to emitters can easily be handled.

In order to achieve the first object, the present invention provides an envelope for a flat panel display comprising a glass envelope which can be hermetically sealed and a support member preventing deformation of the glass envelope when a pressure difference is generated between the inside and the outside of the glass envelope, wherein the glass envelope comprises a front glass and a rear glass in a planar form, the support member comprises a rim, a plurality of bridges and a rear plate, the front glass has a face portion having a substantially rectangular form to display an image, and a skirt portion is extended to the rear glass so that hermetical seal is kept by the contact of a seal edge portion at the end of the skirt portion to the rear glass on which a cathode is disposed, the rim supports outer peripheries of outer surfaces of the skirt portion and the face portion, the rear plate is fixed to the rear glass to support the same, and the rim and the rear plate are connected via a plurality of bridges.

Further, the bridges preferably connect the centers of long sides of the rim to the rear plate, more preferably, other bridges connect the centers of short sides of the rim to the rear plate, particularly preferably, other bridges connect corner portions of the rim to the rear plate.

Further, it is further preferred that a compressive stress layer having a compressive stress value of at least 30 MPa in the outermost surface, is formed at at least a position where a tensile stress generated at the outer surface of an end of the face portion of the front glass in a state that the inside of the glass envelope is evacuated, becomes the maximum.

In order to achieve the second object, in a state that the skirt portion of the front glass and the rear glass are hermetically sealed with an adhesive, it is preferred that the outer periphery of the rear glass is larger than the outer periphery of the seal edge portion in the entire periphery. And it is preferred that a space is formed between the rim and the rear plate so that conductors connected to a cathode on the rear plate can be lead out to the outside through the space.

Further, it is preferred that a first concave crenate portion is provided at the position of a side edge of the rear glass corresponding to the position where the bridge is provided.

Further, it is preferred that a cushioning material having a Young's modulus of from 45 to 80 GPa is provided between the rim and the front glass. It is further preferred that the cushioning material is made of at least one member selected from the group consisting of aluminum, carbon, magnesium and a low-melting point powder glass.

Further, it is preferred that an adhesive having a Young's modulus of from 3 to 80 GPa is provided between the rim and the front glass. It is more preferred that the adhesive is made of at least one member selected from the group consisting of polyimide, polyether imide, polyphenylene sulfide, polyethylene terephthalate, polyethylene naphthalate, aromatic polyamide, indium, polyoxymethylene copolymer, silicone resin and low-melting point powder glass. Further, the above-mentioned cushioning material and the adhesive may be used in combination.

Further, it is further preferred that a second concave portion is provided and a step is formed at the position where the outermost periphery of the face portion connects the skirt portion in the front glass.

According to the envelope for a flat panel display of the present invention, since a support structure for preventing deformation of the glass envelope is provided at the outer side of the glass envelope, a tensile stress generated at the sealed region when an atmospheric pressure is applied, can be suppressed to a low level and it is possible to secure safety even without providing a spacer between a front glass and a rear glass.

Further, the envelope for a flat panel display of the present invention is formed so that conductors connected to emitters are easily lead out to the outside, whereby workability in e.g. a step of connecting electrical wires is good and productivity is thereby improved. Namely, it enables to produce efficiently a light weight and safe flat panel display, which is suitable particularly for a display having a cold-cathode type emitter.

In the accompanying drawings:
Fig. 1 is an explanation view showing a part (a quarter) of the envelope for a flat panel display of the present invention;
Fig. 2 is an explanation view showing a part (a quarter) of a glass envelope in the envelope for a flat panel display of the present invention;
Fig. 3 is an explanation view showing a part (a quarter) of a support member in the envelope for a flat panel display of the present invention;
Fig. 4 is an explanation view showing a peripheral shape of a front glass in the envelope for a flat panel display of the present invention;
Fig. 5 is an explanation view showing cross-sectional shapes of a front glass having a concave portion in a blend radius portion and a front glass having no concave portion in a blend radius portion, and showing their reference points of temperature; and
Fig. 6 is an explanation view showing a part (a quarter) of the envelope for a flat panel display of the present invention, having a front glass with a concave portion in a blend radius portion.

In the following, the present invention will be described in detail.

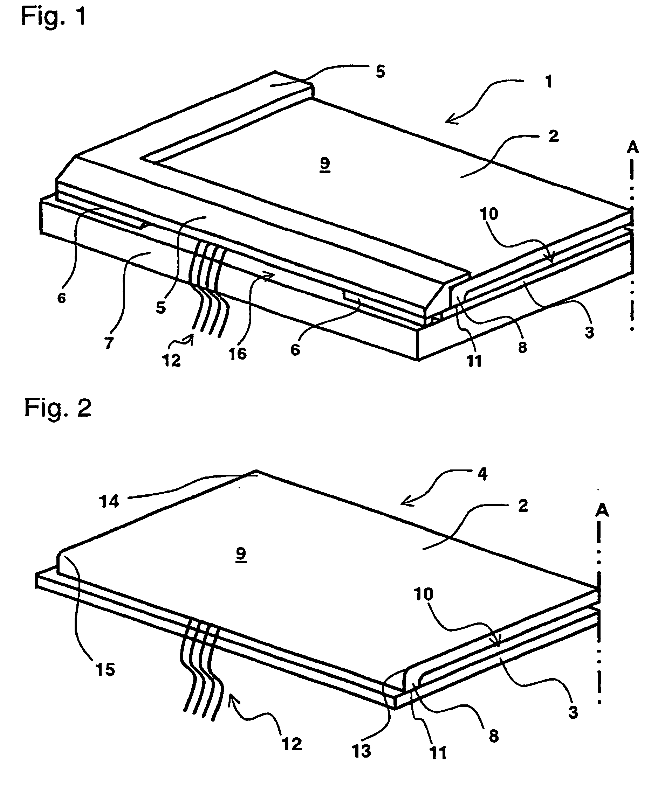

In the present invention, a flat panel display means a self-luminous type flat panel display in which the inside thereof is substantially in a high-vacuum state and an electron beam emitted from an emitter is used for exciting phosphor for emitting light. The envelope 1 for a flat panel display of the present invention shown in Fig. 1, comprises a glass envelope and a support member. The glass envelope comprises a front glass 2 and a rear glass 3 and has a structure capable of forming a hermetically-sealed condition by sealing these components. Fig. 2 schematically shows a glass envelope 4 comprising a front glass 2 and a rear glass 3. Here, the front glass 2 and the rear glass 3 preferably have a Young's modulus of from 70 to 80 GPa.

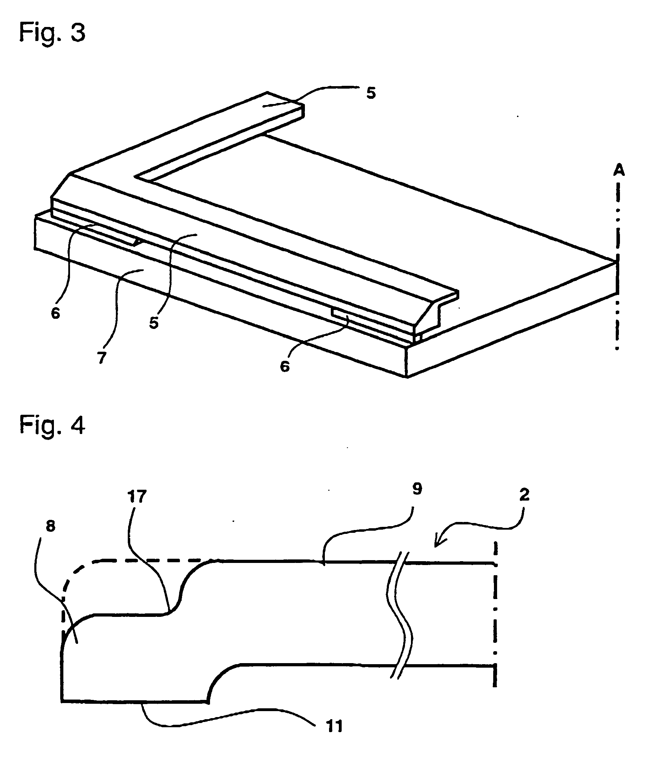

Further, Fig. 3 shows only a support member obtained by omitting the glass envelope 4 from the envelope 1 for a flat plane display. Here, the envelope 1 for a flat panel display in Fig. 1, the glass envelope 4 in Fig. 2 and the support member in Fig. 3, each shows a quarter part of the entirety for simplification. Their actual products each has a symmetrical shape with respect to the axis A of the respective figures. Further, these figures each shows a characteristic portion with exaggeration, and the dimensional ratio of each portion is different from that in the actual product. Here, "exterior envelope" means an exterior envelope for a flat panel display in this specification unless otherwise specified.

The support member comprises a rim 5, bridges 6 and a rear plate 7. The rim 5 supports outer peripheries of the outer surface of a skirt portion 8 and a substantially rectangular face portion 9 of the front glass 2. The rear plate 7 is fixed to the rear glass 3 to support the rear glass 3. The rim 5 and the rear plate 7 are connected via a plurality of bridges 6. Here, the rim 5 and the bridges 6 may be integrally formed or may be formed by bonding at least two components.

Further, the rim 5, the bridges 6 and the rear plate 7 are preferably each made of a metal having a Young's modulus of from 110 to 250 GPa, more preferably made of a metal having a Young's modulus of from 160 to 210 GPa. Specifically, nickel (Young's modulus=160 GPa), titanium (Young's modulus=110 GPa), stainless steel (Young's modulus=210 GPa) or a silicon-containing aluminum (Young's modulus=220 GPa) is preferred. Actually, there is a tendency that as Young's modulus increases, the gravity increases and the thermal expansion coefficient increases, and thereby the difference of the thermal expansion coefficients between the front glass and the rear glass increases. Therefore, the Young's modulus is preferably in the above-mentioned range.

The inside 10 of the glass envelope 4 hermetically sealed, can be in a high-vacuum state of from 10⁻³ to 10⁻⁶ Pa by evacuation. When the inside 10 of the glass envelope 4 is in a high vacuum state and an atmospheric pressure is applied to the outer surface, a force to deform the glass envelope 4 by a pressure difference is exerted. However, such deformation can be prevented by providing the support member comprising the rim 5, the bridges 6 and the rear plate 7.

The front glass 2 comprises a substantially rectangular face portion 9 for displaying an image and a skirt portion 8 formed in the peripheral portion of the face portion 9 to extend toward the rear glass 3. Further, a seal edge portion 11 at the end of the skirt portion 8 and the planar-shaped rear glass 3 on which cathodes are disposed, are hermetically sealed to form a glass envelope 4.

The glass envelope 4 hermetically sealed is applied with a force for bending the face portion 9 in an inward direction when the inside of the glass envelope 4 is evacuated. Therefore, the face portion 9 preferably has a curvature and has a convex form projecting the outside. In a case where the face portion 9 has a curvature and has a convex form projecting to the outside, the face portion 9 becomes relatively flat when the inside of the glass envelope 4 is evacuated and an atmospheric pressure is exerted to the face portion 9. As a result, not only that the viewability of an image is improved, but also the space between the face portion 9 and the rear glass 3 can be made even and the image quality can be improved.

In the exterior envelope 1 for a flat panel display of the present invention, deformation caused by the above-mentioned pressure difference can be prevented and a stress caused by the deformation can be reduced by providing a support member being in contact with the outer peripheries of the outer surfaces of the skirt portion 8 and the face portion 9 of the front glass 2 to support them. Therefore, even without disposing spacers between the front glass 2 and the rear glass 3, deformation or destruction of the glass can be prevented without increasing the width of the seal edge portion 11.

In a case where the skirt portion 8 of the front glass 2 and the rear glass 3 are hermetically sealed by employing an adhesive, in order to stabilize a bonded shape of the adhesive and the glass members, it is preferred to make the outer periphery of the rear glass 3 sufficiently larger than the outer periphery of the seal edge portion 11 in the entire outer periphery in consideration of the protrusion width of the adhesive. Further, wiring work for a large number of conductors 12 connected to emitters (not shown) disposed on the rear glass 3 and work for leading-out of them, become easy. Further, when the outer periphery of the seal edge portion 11 and the outer periphery of the rear glass 3 have the same dimension, a highly accurate positional alignment is required when these members are sealed, and if accuracy in the positioned alignment is poor, a stress concentration is formed in the sealing region whereby the problem of strength occurs.

When the pressure difference between the inside and outside of the glass envelope 4 is formed, the highest tensile strength is generated in the vicinity of the centers 13 of the long sides (ends of the short axis) of the substantially rectangular face portion 9, which leads to increase the possibility of destruction of the glass envelope 4. Therefore, bridges 6 connecting the rim 5 and the rear plate 7 in the support members, are preferably provided at positions corresponding to the centers 13 of the long sides of the face portion 9, namely, on the extension of the short axis of the face portion 9. Distortion and destruction of the glass can be effectively prevented by the bridges 6 thus provided.

Further, the tensile stress is generated also in the vicinity of the centers 14 of the short sides (ends of the long axis) of the face portion, and the vicinity of corner portions 15 (ends of diagonal axes of the face portion 9). Therefore, bridges 6 connecting the rim 5 and the rear plate 7, are more preferably provided also at positions corresponding to the centers 14 of the short sides of the face portion 9 and/or at positions corresponding to the corner portions 15 of the face plate 9. Namely, the bridges 6 are preferably provided on the extension of the short axis of the face portion 9 and/or on the extensions of diagonal axes of the face portion 9. With this construction, it is possible to suppress the force to deform the glass envelope 4 and to prevent a destruction more effectively.

Further, the rim 5 also serves as a cover for the sealing agent protruding from the sealing portion between the seal edge portion 11 and the rear glass 3, and exhibits an effect of preventing a jig from colliding with the sealing member to deteriorate the strength in various production steps.

When the bridges 6 are provided as described above, it is not necessary to provide bridges 6 at positions not corresponding to any one of the positions corresponding to the centers of the long sides (ends of the short axis of the face portion 9), positions corresponding to the centers of the short sides (ends of the long axis) of the face portion and positions corresponding to the corner portions 15 of the face portion. Therefore, a space 16 can be provided between the rim 5 and the rear plate 7. By forming such a construction, the conductors 12 connected to the emitters can be lead out through the space 16, and the handling of the conductors 12 becomes easy. Thus, it is preferred to provide the above-mentioned space.

The rim 5 is in contact with the outer peripheries of outer surfaces of the skirt portion 8 and the face portion 9 of the front glass 2 to support them as described above. A cushioning material having a Young's modulus of from 45 to 80 GPa is preferably interposed between the rim 5 and the front glass 2. By interposing the cushioning material having a Young's modulus relatively close to those of the front glass 2 and the rim 5, relative displacement between the front glass 2 and the rim 5 can be reduced even if they are not bonded, and a stress generated between the rim 5 and the front glass 2 in contact with the rim 5 can be reduced. Here, when the cushioning material is unnecessarily thick (when the thickness is at least 1 mm) or when sufficient friction is not formed between the cushioning member and the front glass or the cushioning material and the rim, an effect of reducing the relative displacement between the rim and the front glass is reduced, and the above-mentioned effect can not be obtained.

When the Young's modulus of the cushioning material is less than 45 GPa, sufficient reinforcing effect to the periphery of the front glass 2 can not be obtained. When the Young's modulus exceeds 80 GPa, the Young's modulus of the cushioning material becomes larger than the Young's modulus of the front glass, and the problem that the stress generated between the cushioning material and the front glass 2 significantly increases, occurs. Therefore, it is preferably from 45 to 80 GPa. The Young's modulus of the cushioning material is more preferably from 70 to 80 GPa.

Specifically, the cushioning material is preferably made of at least one of aluminum (Young's modulus: 69 GPa), carbon (Young's modulus: 70 GPa), magnesium (Young's modulus: 45 GPa) and a sealing glass composition (Young's modulus: 70 GPa) in order to obtain the above effect. Here, the sealing glass composition in the present invention, means a composition obtained by baking a frit paste containing a low-melting point glass powder.

Further, an adhesive having a Young's modulus of from 3 to 80 GPa is preferably interposed between the rim 5 and the front glass 2. When the adhesive is interposed, a thin layer of adhesive can reduce relative displacement between the rim and the front glass, and can increase the reinforcing effect by the rim and the bridges. If the Young's modulus of the adhesive itself is less than 3 GPa, the effect of suppressing the relative displacement is small even in a case that the adhesive layer is thin, and if it exceeds 80 GPa, the Young's modulus of the adhesive become larger than the Young's modulus of the front glass, and there occurs a problem that a stress generated between the adhesive and the front glass 2 significantly increases. Therefore, the Young's modulus is preferably from 3 to 80 GPa. The Young's modulus of the adhesive is more preferably from 40 to 80 GPa since the relative displacement between the rim and the front glass 2 can be minimized.

Specifically, the adhesive is preferably made of at least one member selected from the group consisting of polyimide (Young's modulus: 3 GPa), polyetherimide (Young's modulus: 9 GPa), polyphenylenesulfide (Young's modulus: 4 GPa), polyethylene terephthalate, polyethylene naphthalate, aromatic polyamide (aramid) (Young's modulus: 80 GPa), indium (Young's modulus: 10 GPa), a polyoxymethylene copolymer (Young's modulus: 3 GPa), a silicone resin (Young's modulus: 3 GPa) and a seal glass composition (Young's modulus: 70 GPa) in order to obtain the above effect.

Further, a compressive stress layer having a compressive stress value of at least 30 MPa in the outermost surface, is more preferably formed by a thermal tempering method or a chemical tempering method, at at least a position where a tensile stress generated in the outer end surface of the outer surface of the face portion 9 of the front glass 2 becomes maximum, when the inside of the glass envelope is evacuated. By providing the compressive stress layer, the strength of a non-tempered glass can be further improved, whereby it is possible to make the front glass thinner and lighter.

The method for forming the above compressive stress layer may, for example, be a thermal tempering method as described in the specification of Japanese Patent No. 2904067, or a chemical tempering method (ion exchange method) in which a specific alkali ion in a glass is substituted by a larger ion at a temperature of the distortion point or lower to increase the volume to form a compressive stress layer at the surface, or may be any other method.

Here, in a case of measuring an actual stress value in the compressive stress layer, the measurement is performed as follows. As a measurement method of compressive stress of a glass member, there is a method of measuring the compressive stress value by employing the nature that the difference of the refractive indexes between the principle stress directions generated when a glass member receives a force is in proportion to the stress difference. When linearly polarized light is transmitted through a glass member to which a stress is exerted, the transmitted light is separated into elemental waves having polarization planes perpendicular to the respective principle stress directions and having different speeds. After the elemental waves are transmitted through the glass, one of the elemental waves propagates behind the other wave, and the refractive index of the glass is different between the principal stress directions correspondingly to the difference in the speed of the elemental waves. Since the stress difference of the glass is proportional to the difference of refractive index, namely to birefringence, the stress can be measured from the phase difference of elemental waves.

With a polarizing microscope employing this principle, a stress is measured by transmitting light through a cross-sectional surface of a glass member having a residual stress, and measuring the phase difference between light elements vibrating in the respective principal stress directions after the light is transmitted. In this case, a polarizer is disposed in front of the glass, and a plate having a phase difference and an analyzer for detecting polarization are disposed in rear of the glass through which light passes. The plate having a phase difference may, for example, be a Belec compensator, a Babinet compensator or a quarter-wave plate. By employing these, since a dark line can be formed so as to make the phase difference zero in a region to be measured, the stress value can be obtained from an adjustment amount of the compensator.

Further, instead of the above various compensators, a sensitive tint plate can be used, which has an optical path difference in the vicinity of 565 nm and has an interference color changeable by a slight change of optical path difference, whereby an interference color corresponding to a phase difference of light transmitted through the glass caused by a slight birefringence, can be displayed, and the level of stress can be identified by the color. By employing this characteristic, the cross-sectional surface of the glass is observed and the thickness of a compressive stress layer is measured.

Further, in the above front glass, it is preferred to make the thickness t of the face portion at the center to be in a predetermined range based on the largest outer diameter d in the diagonal directions of the face portion. Specifically, in a case where no compressive stress layer is formed by e.g. a thermal tempering method or a chemical tempering method at a position in the outer surface of the end of the face portion where the tensile stress generated becomes maximum, and only an unintended compressive stress generated at a time of forming the glass by a known method, or a compressive stress is not observed in the portion, it is preferred that a formula 0.028≦t/d<0.04 is satisfied. On the other hand, in a case where a compressive stress layer is formed by a thermal tempering method or a chemical tempering method at a position in the outer surface of the end of the face portion where the tensile stress generated becomes maximum, it is preferred that a formula 0.003≦t/d<0.028 is satisfied.

Thus by making the face portion thin, it becomes possible to reduce the weight of the front glass while maintaining the safety.

Further, in the envelope 1 for a flat panel display of the present invention, in order to improve workability in an evacuation step to evacuate the inside 10 of the glass envelope 4, it is preferred that at least one exhaust pipe (not shown) is provided to the rear glass 3 and the rear plate 7 for connecting these.

Further, as show in Fig. 4, a concave portion 17 is preferably provided in the front glass 2 at a position where the outermost periphery of the face portion 9 connects the skirt portion 8. In this case, the cross-sectional shape shows a shape in which a step is formed. Usually, at the position (hereinafter referred to as "blend radius portion") where the face portion 9 and the skirt portion 8 are connected, the thickness of glass is larger than the face portion 9 or the skirt portion 8. Therefore, in the blend radius portion, heat is easily accumulated after it is heated in a forming step.

On the other hand, the center of the face portion having relatively small wall thickness quickly dissipates heat to be cooled, whereby a temperature difference is resulted between the center of the face portion 9 and the blend radius portion, which may cause inappropriate deformation or cracks in the front glass 2.

However, when a concave portion is provided in the blend radius portion as in the present invention, since the portion has not only a small wall thickness but also a large surface area, effective heat-dissipation and cooling can be obtained and the temperature difference between this portion and the center of the face portion can be reduced. Therefore, the above problem occurring in the front glass 2 can be solved.

Further, since the thermal capacity of the blend radius portion and its vicinity can be small, the entire front glass 2 can be heated more quickly and evenly in a heating step at a time of evacuating the envelope in vacuum. Therefore, by employing the front glass 2 provided with the above concave portion 17, generation of unnecessary tensile stress due to the temperature difference in the production process can be reduced.

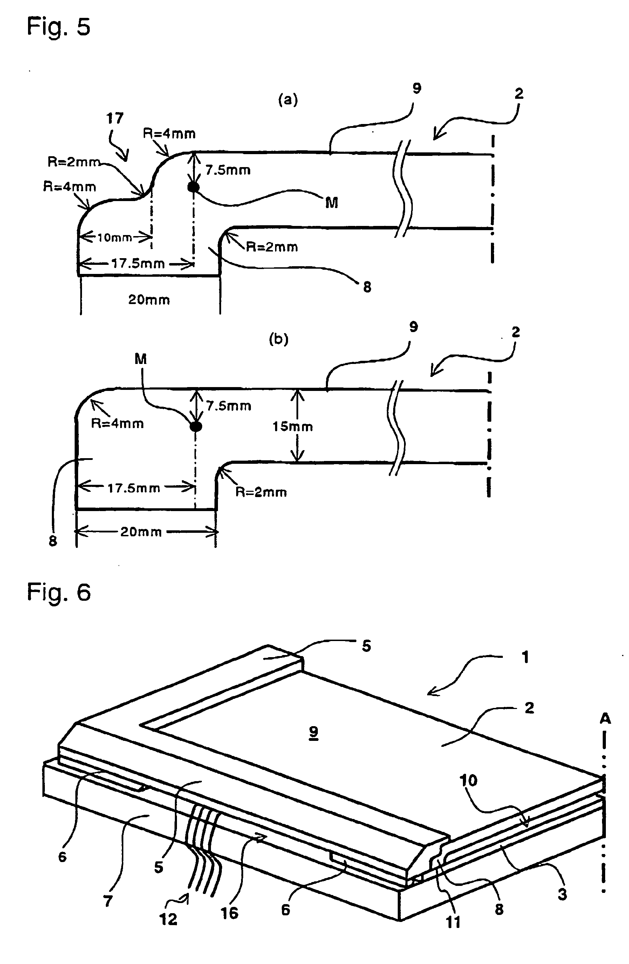

Here, in a case where the concave portion 17 is provided in the blend radius portion of the front glass 2 as described above, it is preferred that a convex portion is provided in the rim 5 supporting the front glass 2 so that the rim 5 and the front glass 2 are brought to close contact as shown in Fig. 6.

### EXAMPLE

Now, the envelope for a flat plane display of the present invention will be described in detail according to Examples. In the Examples, the following values (described in Table 1) are used for the conditions.

**TABLE 1**

| | |
|---|---|
| Length of diagonal line of face portion of front glass:d (maximum diameter of front glass) | 1016 mm (40 inches) |
| Aspect ratio of face portion of front glass | 16:9 |
| Distance between inner surfaces of front glass and rear glass at the center | 5 mm |
| Thickness of rear glass | 2.8 mm |
| Size of rear glass | Outermost periphery protrudes 5 mm from outermost periphery of front glass |
| Size of rear plate | Outermost periphery protrudes 10 mm from outermost periphery of rear glass |
| Thickness of rear plate | 15 mm |
| Young's modulus of front glass and rear glass | 76 GPa |
| Poisson's ratio of front glass and rear glass | 0.21 |

Under the above conditions, with respect to a model of the quarter part of the envelope shown in Fig. 1, a numerical analysis of stress at a time of applying an atmospheric pressure to the face portion, was performed by a finite element method (ten-node tetrahedron element) in Examples (Examples 1 to 4). Further, in Comparative Examples, with respect to a model consisting only of the glass envelope and a reinforcement plate (rear plate) for the rear glass having no rim or bridges among the support members, the same numerical analysis of stress was performed (Examples 5 to 8). Example 7 is an example in which the width of the seal edge portion is determined so that the maximum tensile stress generated at the sealing portion becomes 4 MPa. Example 8 is an example in which the glass thickness at the center of the face portion of the front glass is determined so that the maximum tensile stress generated at an end of the short axis of the face portion becomes 11 MPa.

Here, in Examples 1 to 8, the rear plate, the rim and the bridges are all assumed to be made of nickel (Young's modulus: 160 GPa). Examples 1 to 8 are described as follows.

### EXAMPLE 1

An example of an envelope having a width of a seal edge portion of a front glass of 20 mm, a thickness (t) at the center of a face portion of 15 mm, and a thickness of a rear plate of 15 mm, and having support member consisting of a rim, bridges and a rear plate.

### EXAMPLE 2

An example under the same conditions as Example 1 except that the thickness at the center of the face portion is 10 mm thicker than Example 1.

### EXAMPLE 3

An example under the same conditions as Example 1 except that the thickness at the center of the face portion is 15 mm thicker than Example 1.

### EXAMPLE 4

An example under the same conditions as Example 1 except that the thickness at the center of the face portion is 23 mm thicker than Example 1.

### EXAMPLE 5

An envelope having a thickness of a seal edge portion being 10 mm thinner than Example 1, and provided with a rear plate but not provided with a rim and bridges (Comparative Example). Other conditions are the same as those of Example 1.

### EXAMPLE 6

A comparative example under the same conditions as Example 5 except that the width of the seal edge portion is 10 mm thicker than Example 5.

### EXAMPLE 7

A comparative example under the same conditions as Example 5 except that the width of the seal edge portion is adjusted so as to reduce the maximum tensile stress generated at the seal edge portion to be at most 4 MPa.

### EXAMPLE 8

A comparative example under the same conditions as Example 5 except that the width of the seal edge portion is adjusted so as to reduce the maximum tensile stress generated at the sealing portion to be at most 4 MPa and the thickness at the center of the face portion is 10 mm thicker than Example 5.

With respect to the above Examples 1 to 8, the deflection at the center of the face portion and the maximum tensile stresses generated at the sealing portion and the end of short axis of the face portion, are shown in Tables 2 and 3.

**TABLE 2**

| | Example | | | |
|---|---|---|---|---|
| | Ex. 1 | Ex. 2 | Ex. 3 | Ex. 4 |
| Width of seal edge portion | 20 mm | 20 mm | 20 mm | 20 mm |
| Thickness at the center of face portion:t | 15 mm | 25 mm | 30 mm | 38 mm |
| t/d | 0.015 | 0.025 | 0.030 | 0.037 |
| Deflection at the center of face portion | 0.59 mm | 0.16 mm | 0.10 mm | 0.06 mm |
| Maximum tensile stress generated at sealing portion | 9 MPa | 5 MPa | 4 MPa | 4 MPa |
| Maximum tensile stress generated at the end of short axis of face portion | 40 Mpa | 16 MPa | 11 MPa | 7 MPa |

**TABLE 3**

| | Comparative Example | | | |
|---|---|---|---|---|
| | Ex. 5 | Ex. 6 | Ex. 7 | Ex. 8 |
| Width of seal edge portion | 10 mm | 20 mm | 35 mm | 35 mm |
| Thickness at the center of face portion:t | 15 mm | 15 mm | 15 mm | 25 mm |
| t/d | 0.015 | 0.015 | 0.015 | 0.025 |
| Deflection at the center of face portion | 0.80 mm | 0.61 mm | 0.50 mm | 0.14 mm |
| Maximum tensile stress generated at sealing portion | 96 MPa | 26 MPa | 4 MPa | 4 MPa |
| Maximum tensile stress generated at the end of short axis of face portion | 40 MPa | 40 MPa | 34 MPa | 11 MPa |

According to the results of the above numerical analysis, it is evident that in the envelopes of Examples 1 to 4 provided with the support member of the present invention in which a rim, bridges and a rear plate are integrated, the deflection of the front glass is small as compared with the envelopes of Examples 5 and 6 without rim and bridges. Further, in the envelope of the present invention, it has been understood that although it has a structure having no spacers inside, "the maximum tensile stress generated at the sealing portion" when an atmospheric pressure is applied, is extremely low without requiring an excessive increase of the width of the seal edge portion.

Here, since the Examples of Example 1 and Example 2 are under assumption that a compressive stress layer is formed at the ends of the short axis of the face portion, a relatively high maximum tensile stress is generated at these portions. Therefore, in order to prevent destruction by the maximum tensile stress at the ends of the short axis of the face portion in the Table, it is necessary to introduce a strengthening compressive stress.

On the other hand, in the Examples of Example 3 and Example 4, since the maximum tensile stress generated at the ends of the short axis of the face portion is reduced by making the face portion thick, introduction of strengthening compressive stress (forming of compressive stress layer) is not necessary.

In the Example of Example 1, although it has a large deflection at the center of the face portion of the front glass as compared with Examples 2 to 4, the "deflection at the center of the face portion" can be reduced by curving the face portion into a convex form toward the outside before the inside of the envelope is evacuated.

Specifically, in a case of front glass "whose face portion is flat before the inside of the envelope is evacuated, but the face portion defects a (mm) toward the inside of the envelope after the inside of the envelope is evacuated", the face portion can be made substantially flat after the inside of the exterior envelope is evacuated by curving the face portion so that the center of the face portion has a convex form deflecting outwardly by a (mm). As a result, the envelope having a flat face portion and durable against an atmospheric pressure, can preferably be provided without making the glass excessively thick.

Further, when the maximum tensile stress generated at the sealing portion is suppressed to be 4 MPa as in Examples 3 and 4 by increasing the width of the seal edge portion without providing a rim and bridges, it is necessary to determine the width of the seal edge portion to be 35 mm as in the Comparative Examples of Examples 7 and 8. Therefore, a remarkable increase of the width is unavoidable in comparison with the width (20 mm) of the seal edge portions of the Examples (Examples 1 to 4) of the present invention.

If the width of the seal edge portion is large as in the Comparative Examples of Examples 7 and 8, the area to be coated with a sealing agent (adhesive) becomes large, the difference between a portion where an appropriate heating is applied and a portion where the heat is not sufficiently applied is formed in the sealing agent at a time of sealing, which causes an uneven sealing. As a result, the sealing strength is lowered and it becomes difficult to maintain a proper degree of vacuum. Further, when the maximum outer diameter d in a diagonal axis direction of the face portion is made constant, an image display area on which the phosphor is coated becomes smaller as the width of the seal edge portion becomes larger.

Further, in order to keep the maximum tensile stress generated at the ends of the short axis of the face portion to be a low level (11 MPa) by increasing the width of the seal edge portion without providing a rim and bridges, and by increasing the thickness of the glass at the center of the face portion, it is necessary that the width of the seal edge portion be 35 mm and, at the same time, the thickness of the glass at the center of the face portion be 25 mm as in Example 8, which causes further increase of the mass.

In a case where the effective area is equal to that of Example 1 and a rim and bridges are not provided, the outer diameter of the front glass has to be increased in order to keep the maximum stress at the sealing portion to the same level.

For example, when the width of the seal edge portion is 35 mm, the area of effective screen is the same as that of Example 1 without providing any rim and bridges, the maximum tensile stress generated at the ends of the short axis of the face portion is suppressed to be 7 MPa and the maximum tensile strength generated at the sealing portion is suppressed to be 4 MPa in the same manner as Example 4, the center of the face portion becomes 35 mm which is thicker than that of Example 8 (t=25 mm). In such a front glass, the mass becomes 2.53 times of that of the front glass of Example 1 and the mass becomes 1.02 times of that of the front panel of Example 4. Namely, the construction without rim and bridges leads to further increase of the mass.

Then, effects obtained by providing a concave portion at the blend radius portion of the front glass will be described. Here, with respect to an example having a concave portion at the blend radius portion (Example 11) and an example having no concave portion at the blend radius portion (Example 12), the temperature after a lapse of predetermined time from the start of cooling is shown. Specifically, a non-steady heat conduction analysis by a finite element method was performed under the conditions shown in Table 4, and a glass temperature from a time when the temperature of entire glass was 1,000°C until it becomes a room temperature was obtained by a numerical calculation. Here, the numerical calculation was an axisymmetric analysis and a cross-sectional shape as an object of the analysis is shown in Fig. 5. Fig. 5(a) shows a cross section of the front glass of Example 11, and Fig. 5(b) shows a cross section of the front glass of Example 12. Further, a point M in Fig. 5 shows a reference point of the temperature in the periphery of the glass.

**TABLE 4**

| | |
|---|---|
| Thermal conductivity of front glass | 1.29 (W·m⁻¹·K⁻¹) |
| Specific heat of front glass | 1340 (J·kg⁻¹·°C⁻¹) |
| Density of front glass | 2.8x10³ |
| Initial temperature of front glass | 1000 (°C) |
| Environmental temperature | 25 (°C) |
| Surface heat transfer coefficient of front glass | 200 (W·m⁻²·K⁻¹) |

Table 5 shows temperature changes after the start of cooling in the above Example 11 and Example 12. Tp (°C) indicates a temperature at the reference point M of temperature shown in Fig. 5. Further, T_{c} (°C) indicates a temperature at the outer surface at the center of the face portion.

**TABLE 5**

| | | Lapse of time after start of cooling | | |
|---|---|---|---|---|
| | | 100 sec. | 200 sec. | 300 sec. |
| Ex. 11 | T_{c}: Temperature at the center of face portion (°C) | 436 | 273 | 175 |
| | Tₚ: Reference temperature in the periphery (°C) | 387 | 217 | 129 |
| | T_{c}-Tₚ (°C) | 49 | 56 | 46 |
| Ex. 12 | T_{c}: Temperature at the center of face portion (°C) | 436 | 273 | 175 |
| | Tₚ: Reference temperature in the periphery (°C) | 753 | 463 | 286 |
| | \|T_{c}-Tₚ\| (°C) | 317 | 190 | 111 |

According to the result shown in Table 5, in the front glass (Example 11) of the present invention having a concave portion in the blend radius portion in the periphery, the temperature difference between the center and the periphery of the face portion is extremely small in the cooling step as compared with the front glass (Example 12) having no concave portion. Therefore, generation of unnecessary tensile stress due to the temperature difference can be reduced, and a cooling time required for cooling a front glass to a room temperature can be reduced, such being advantageous from viewpoints of product quality and forming efficiency.

Since the envelope for a flat panel display of the present invention has a strength durable to a stress generated when an atmospheric pressure is applied, there is no need of disposing spacers between the front glass and the rear glass, which solves various problems related to the spacers. Further, since the handling of conductors connected to emitters is easy, the present invention provides excellent workability in the production process, and therefore, the present invention is useful.

## Claims

1. An envelope (1) for a flat panel display comprising a glass envelope (1) which can be hermetically sealed,
wherein the glass envelope comprises a front glass (2) and a rear glass (3) in a planar form, the front glass (2) has a face portion (9) having a substantially rectangular form to display an image,
said envelope further comprises a support member preventing deformation of the glass envelope (4) when a pressure difference is generated between the inside (10) and outside of the glass envelope, said support member comprising a rim (5), a plurality of bridges (6) and a rear plate (7) the rear plate(7) is fixed to the rear glass (3) to support the same, and the rim (5) and the rear plate (3) are connected via a plurality of bridges (6), **characterized in that** the front glass (2) has a skirt portion (8) extended to the rear glass (3) so that hermetical seal is kept by the contact of a seal edge portion (11) at the end of the skirt portion (8) to the rear glass (3) on which a cathode is disposed and wherein the rim (5) supports outer peripheries of outer surfaces of the skirt portion (8) and the face portion (9).

2. The envelope(1) for a flat panel display according to Claim 1, wherein in a state that the skirt portion (8) of the front glass(2) and the rear glass(3) are hermetically sealed, the outer periphery of the rear glass (3) is larger than the outer periphery of the seal edge portion (11) in the entire periphery.

3. The envelope (1) for a flat panel display according to Claim 1 or 2, wherein the bridges (6) connect at least the centers (13) of long sides of the rim (5) to the

4. The envelope (1) for a flat panel display according to any one of the claims 1 to 3, wherein the bridges (6) connect the centers (14) of short sides of the rim (5) with the rear plate (7).

5. The envelope (1) for a flat panel display according to any one of the claims 1 to 4, wherein the bridges (6) connect corner portions (15) of the rim (5) with the rear plate (7).

6. The envelope(1) for a flat panel display according to Claim 3, 4 or 5, wherein a space is formed between the rim (5) and the rear plate(7) so that conductors connected to a cathode on the rear plate (7) can be lead out to the outside through the space.

7. The envelope (1) for a flat panel display according to any one of the claims 1 to 6, wherein a first concave crenate portion is provided at the position of a side edge of the rear glass (3) corresponding to the position where the bridge (6) is provided.

8. The envelope (1) for a flat panel display according to any one of Claims 1 to 7, wherein a cushioning material having a Young's modulus of from 45 to 80 GPa is provided between the rim (7) and the front glass (2).

9. The envelope(1) for a flat panel display according to any one of Claims 1 to 7, wherein an adhesive layer having a Young's modulus of from 3 to 80 GPa in a solidified state, is provided between the rim (5) and the front glass (2).

10. The envelope (1) for a flat panel display according to any one of Claims 1 to 7, wherein a cushioning material having a Young's modulus of from 45 to 80 GPa and an adhesive layer having a Young's modulus of from 3 to 80 GPa in a solidified state, are provided between the rim (5) and the front glass(2).

11. The envelope (1) for a flat panel display according to Claim 8 or 10, wherein the cushioning material is made of at least one member selected from a group consisting of aluminum, magnesium, carbon and a sealing glass composition.

12. The envelope (1) for a flat panel display according to Claim 9 or 10, wherein the adhesive is made of at least one member selected from a group consisting of polyimide, polyether imide, polyphenylene sulfide, polyethylene terephthalate, polyethylene naphthalate, aromatic polyamide, indium, polyoxymethylene copolymer, silicone resin and a sealing glass composition.

13. The envelope (1) for a flat panel display according to any one of Claims 1 to 12, wherein a compressive stress layer having a compressive stress value of at least 30 MPa at the outermost surface, is formed by thermal tempering or chemical tempering at at least a position where a tensile stress generated at the outer surface of an end of the face portion (9) of the front glass (2) in a state that the inside (10) of the glass envelope (4) is evacuated becomes the maximum.

14. The envelope (1) for a flat panel display according to any one of Claims 1 to 13, wherein the maximum outer diameter d in a diagonal direction of the face portion (9) and the thickness t of the center of the face portion (9) in the front glass (2), satisfies a relation 0.028≤t/d<0.04.

15. The envelope (1) for a flat panel display according to any one of claims 1 to 13, wherein the maximum outer diameter d in a diagonal direction of the face portion (9) and the thickness t of the center of the face portion (9) in the front glass(2) satisfies a relation 0.003 ≤t/d<0.028.

16. The envelope (1) for a flat panel display according to any one of Claims 1 to 15, wherein the front glass(2) and the rear glass (3) are hermetically sealed with a sealing agent, the rim (5) has a flange portion overhanging outwardly from the lower end of the rim (5) on the rear glass side, and the width w1 of the flange portion and the maximum protruding width w2 of the sealing agent in the region where the sealing agent protrudes from the width of the seal edge portion of the front glass, satisfy a relation w1>w2.

17. The envelope for a flat panel display according to any one of Claims 1 to 16, wherein a concave portion is provided in the front glass at the position where the outermost periphery of the face portion connects to the skirt portion.

18. A flat panel display **characterized by** comprising a cold-cathode type emitter and the envelope (1) for a flat panel display as defined in any one of Claims 1 to 17.

## Patentansprüche

1. Kolbenteil bzw. Umhüllung (1) für eine flache Anzeigevorrichtung bzw. Flachschirmanzeige, umfassend einen Glaskolben bzw. -umhüllung (1), welcher hermetisch abgedichtet werden kann,
wobei der Glaskolben ein vorderes Glas (2) und ein rückwärtiges Glas (3) in einer ebenen bzw. planaren Form umfaßt, das vordere Glas (2) einen Sicht- bzw. Vorderabschnitt (9) aufweist, der eine im wesentlichen rechteckige Form aufweist, um ein Bild anzuzeigen,
der Kolben weiterhin ein Abstütz- bzw. Supportglied umfaßt, das eine Deformation des Glaskolbens (4) verhindert, wenn ein Druckunterschied zwischen dem Inneren (10) und dem Äußeren des Glaskolbens erzeugt bzw. generiert ist bzw. wird, wobei das Supportglied einen Rand bzw. eine Einfassung (5), eine Mehrzahl von Brücken (6) und eine rückwärtige Platte (7) umfaßt,
die rückwärtige Platte (7) an das rückwärtige Glas (3) festgelegt ist, um dasselbe zu unterstützen, und die Einfassung (5) und die rückwärtige Platte (3) über eine Mehrzahl von Brücken (6) verbunden sind, **dadurch gekennzeichnet, daß** das vordere Glas (2) einen Rand- bzw. Saumabschnitt (8) aufweist, der sich über das rückwärtige Glas (3) derart erstreckt, daß eine hermetische Abdichtung durch den Kontakt eines Dichtkantenabschnitts (11) an dem Ende des Saumabschnitts (8) zu dem rückwärtigen Glas (3) aufrecht erhalten ist, auf welchem eine Kathode angeordnet ist, und wobei die Einfassung (5) Außenumfänge von äußeren Flächen bzw. Oberflächen des Saumabschnitts (8) und des Vorderabschnitts (9) unterstützt.

2. Kolbenteil (1) für eine flache Anzeigevorrichtung nach Anspruch 1, wobei in einem Zustand, daß der Saumabschnitt (8) des,vorderen Glases (2) und des rückwärtigen Glases (3) hermetisch abgedichtet sind, der Außenumfang des rückwärtigen Glases (3) größer als der Außenumfang des Dichtkantenabschnitts (11) in dem gesamten Umfang ist.

3. Kolbenteil (1) für eine flache Anzeigevorrichtung nach Anspruch 1 oder 2, wobei die Brücken (6) wenigstens die Zentren bzw. Mitten (13) von langen Seiten der Einfassung (5) zu der rückwärtigen Platte (7) verbinden.

4. Kolbenteil (1) für eine flache Anzeigevorrichtung nach einem der Ansprüche 1 bis 3, wobei die Brücken (6) die Zentren bzw. Mitten (14) von kurzen Seiten der Einfassung (5) mit der rückwärtigen Platte (7) verbinden.

5. Kolbenteil (1) für eine flache Anzeigevorrichtung nach einem der Ansprüche 1 bis 4, wobei die Brücken (6) Eckabschnitte (15) der Einfassung (5) mit der rückwärtigen Platte (7) verbinden.

6. Kolbenteil (1) für eine flache Anzeigevorrichtung nach Anspruch 3; 4 oder 5, wobei ein Abstand bzw. Raum zwischen der Einfassung (5) und der rückwärtigen Platte (7) derart gebildet ist, daß Leiter, die mit einer Kathode auf bzw. an der rückwärtigen Platte (7) verbunden sind, zur Außenseite durch den Raum geführt werden können.

7. Kolbenteil (1) für eine flache Anzeigevorrichtung nach einem der Ansprüche 1 bis 6, wobei ein erster konkaver gekerbter Abschnitt an der Position einer Seitenkante des rückwärtigen Glases (3) entsprechend der Position zur Verfügung gestellt ist, wo die Brücke (6) zur Verfügung gestellt ist.

8. Kolbenteil (1) für eine flache Anzeigevorrichtung nach einem der Ansprüche 1 bis 7, wobei ein Dämpfungsmaterial, das einen Young-Modul von 45 bis 80 GPa aufweist, zwischen der Einfassung (7) und dem vorderen Glas (2) zur Verfügung gestellt ist.

9. Kolbenteil (1) für eine flache Anzeigevorrichtung nach einem der Ansprüche 1 bis 7, wobei eine Kleberschicht, die einen Young-Modul von 3 bis 80 GPa in einem verfestigten Zustand aufweist, zwischen der Einfassung (5) und dem vorderen Glas (2) zur Verfügung gestellt ist.

10. Kolbenteil (1) für eine flache Anzeigevorrichtung nach einem der Ansprüche 1 bis 7, wobei ein Dämpfungsmaterial, das einen Young-Modul von 45 bis 80 GPa aufweist, und eine Kleberschicht, die einen Young-Modul von 3 bis 80 GPa in einem verfestigten Zustand aufweist, zwischen der Einfassung (5) und dem vorderen Glas (2) zur Verfügung gestellt sind.

11. Kolbenteil (11) für eine flache Anzeigevorrichtung nach Anspruch 8 oder 10, wobei das Dämpfungsmaterial aus wenigstens einem Mitglied, gewählt aus einer Gruppe, bestehend aus Aluminium, Magnesium, Kohlenstoff und einer Dichtglaszusammensetzung gefertigt bzw. hergestellt ist.

12. Kolbenteil (1) für eine flache Anzeigevorrichtung nach Anspruch 9 oder 10, wobei der Kleber aus wenigstens einem Mitglied, gewählt aus einer Gruppe, bestehend aus Polyimid, Polyetherimid, Polyphenylensulfid, Polyethylenterephthalat, Polyethylennaphthalat, aromatisches Polyamid, Indium, Polyoxymethylencopolymer, Silikonharz und einer Dichtglaszusammensetzung hergestellt ist.

13. Kolbenteil (1) für eine flache Anzeigevorrichtung nach einem der Ansprüche 1 bis 12, wobei eine Druckspannungsschicht, die einen Druckspannungswert von wenigstens 30 MPa an der äußersten Oberfläche bzw. Fläche aufweist, durch ein thermisches Tempern oder chemisches Tempern an wenigstens einer Position ausgebildet ist, wo eine Zugspannung bzw. -beanspruchung, die an der Außenoberfläche eines Endes des Vorderabschnitts (9) des vorderen Glases (2) generiert ist bzw. wird, in einem Zustand, daß das Innere (10) des Glaskolbens (4) evakuiert ist bzw. wird, maximal wird.

14. Kolbenteil (1) für eine flache Anzeigevorrichtung nach einem der Ansprüche 1 bis 13, wobei der maximale Außendurchmesser d in einer diagonalen Richtung des Vorderabschnitts (9) und die Dicke t des Zentrums des Vorderabschnitts (9) in der vorderen Glasscheibe (2) eine Beziehung 0,028≤t/d<0,04 erfüllen.

15. Kolbenteil (1) für eine flache Anzeigevorrichtung nach einem der Ansprüche 1 bis 13, wobei der maximale Außendurchmesser d in einer diagonalen Richtung des Vorderabschnitts (9) und die Dicke t des Zentrums des Vorderabschnitts (9) in der vorderen Glasscheibe (2) eine Beziehung 0,003≤t/d<0,028 erfüllen.

16. Kolbenteil (1) für eine flache Anzeigevorrichtung nach einem der Ansprüche 1 bis 15, wobei das vordere Glas (2) und das rückwärtige Glas (3) hermetisch mit einem Agens bzw. Dichtmittel abgedichtet sind, die Einfassung (5) einen Flanschabschnitt aufweist, der nach außen von dem unteren Ende der Einfassung (5) auf der Seite des rückwärtigen Glases vorragt bzw. überhängt, und die Breite w1 des Flanschabschnitts und die maximale vorragende Breite w2 des Dichtagens bzw. - mittels in dem Bereich, wo das dichtende Agens von der Breite des Dichtkantenabschnitts bzw. Dichtrandabschnitts des vorderen Glases vorragt, eine Beziehung w1>w2 erfüllen.

17. Kolbenteil für eine flache Anzeigevorrichtung nach einem der Ansprüche 1 bis 16, wobei ein konkaver Abschnitt in dem vorderen Glas an der Position zur Verfügung gestellt ist, wo der äußerste Umfang des Vorderabschnitts mit dem Randabschnitt verbunden ist.

18. Flache Anzeigevorrichtung bzw. Flachschirmanzeige, **gekennzeichnet dadurch, daß** sie einen Kaltkathodentyp-Emitter und das Kolbenteil (1) für eine flache Anzeigevorrichtung umfaßt, wie es in einem der Ansprüche 1 bis 17 definiert ist.

## Revendications

1. Enveloppe (1) pour un dispositif d'affichage plat comprenant une enveloppe en verre (1) qui peut être étanchée hermétiquement,
dans laquelle l'enveloppe en verre comprend une vitre avant (2) et une vitre arrière (3) dans une forme plane, la vitre avant (2) a une portion de surface (9) ayant une forme sensiblement rectangulaire pour afficher une image,
ladite enveloppe comprend en outre un élément support comme prévention à la déformation de l'enveloppe en verre (4) lorsqu'une différence de pression est générée entre l'intérieur (10) et l'extérieur de l'enveloppe en verre, ledit élément support comprenant un rebord (5), une pluralité de pontages (6) et une plaque arrière (7), la plaque arrière (7) est fixée à la vitre arrière (3) pour soutenir celle-ci, et le rebord (5) et la plaque arrière (3) sont reliés par l'intermédiaire d'une pluralité de pontages (6),
**caractérisée en ce que** la vitre avant (2) a une portion de bordure (8) étendue vers la vitre arrière (3) de telle sorte que l'étanchéité hermétique est conservée par le contact d'une portion de bord d'étanchéité (11) sur l'extrémité de la portion de bordure (8) vers la vitre arrière (3) sur laquelle est disposée une cathode et dans laquelle le rebord (5) soutient des périphéries extérieures des surfaces extérieures de la portion de bordure (8) et de la portion de surface (9).

2. Enveloppe (1) pour un dispositif d'affichage plat selon la revendication 1, dans laquelle, dans un état tel que la portion de bordure (8) de la vitre avant (2) et de la vitre arrière (3) sont étanchées hermétiquement, la périphérie extérieure de la vitre arrière (3) est plus grande que la périphérie extérieure de chaque portion de bord d'étanchéité (11) dans la périphérie entière.

3. Enveloppe (1) pour un dispositif d'affichage plat selon l'une ou l'autre des revendications 1 et 2, dans laquelle les pontages (6) relient au moins les centres (13) des côtés longs du rebord (5) à la plaque arrière (7).

4. Enveloppe (1) pour un dispositif d'affichage plat selon l'une quelconque des revendications 1 à 3; dans laquelle les pontages (6) relient les centres (14) des côtés courts du rebord (5) à la plaque arrière (7).

5. Enveloppe (1) pour un dispositif d'affichage plat selon l'une quelconque des revendications 1 à 4, dans laquelle les pontages (6) relient des portions de coin (15) du rebord (5) à la plaque arrière (7).

6. Enveloppe (1) pour un dispositif d'affichage plat selon la revendication 3, 4 ou 5, dans laquelle un espace est formé entre le rebord (5) et la plaque arrière (7) de telle sorte que des conducteurs connectés à une cathode sur la plaque arrière (7) peuvent être menés vers l'extérieur à travers l'espace.

7. Enveloppe (1) pour un dispositif d'affichage plat selon l'une quelconque des revendications 1 à 6, dans laquelle une première portion concave crénelée est prévue sur la position d'un bord latéral de la vitre arrière (3) correspondant à la position où le pontage (6) est prévu.

8. Enveloppe (1) pour un dispositif d'affichage plat selon l'une quelconque des revendications 1 à 7, dans laquelle un matériau d'amortissement ayant un module de Young de 45 à 80 GPa est prévu entre le rebord (7) et la vitre avant (2).

9. Enveloppe (1) pour un dispositif d'affichage plat selon l'une quelconque des revendications 1 à 7, dans laquelle une couche adhésive ayant un module de Young de 3 à 80 GPa dans un état solidifié est prévue entre le rebord (5) et la vitre avant (2).

10. Enveloppe (1) pour un dispositif d'affichage plat selon l'une quelconque des revendications 1 à 7, dans laquelle un matériau d'amortissement ayant un module de Young de 45 à 80 GPa et une couche adhésive ayant un module de Young de 3 à 80 GPa dans un état solidifié sont prévus entre le rebord (5) et la vitre avant (2).

11. Enveloppe (1) pour un dispositif d'affichage plat selon l'une ou l'autre des revendications 8 et 10, dans laquelle le matériau d'amortissement est fabriqué d'au moins un élément choisi parmi un groupe constitué de l'aluminium, du magnésium, du carbone et d'une composition de verre d'étanchement.

12. Enveloppe (1) pour un dispositif d'affichage plat selon l'une ou l'autre des revendications 9 et 10, dans laquelle là couche adhésive est fabriquée d'au moins un élément choisi parmi un groupe constitué de polyimide, d'imide de polyéther, de sulfure de polyphénylène, de polyéthylène téréphtalate, de polyéthylène naphtalate, de polyamide aromatique, d'indium, de copolymère de polyoxyméthylène, de résine silicone et d'une composition de verre d'étanchement.

13. Enveloppe (1) pour un dispositif d'affichage plat selon l'une quelconque des revendications 1 à 12, dans laquelle une couche de contrainte de compression ayant une valeur de contrainte de compression d'au moins 30 MPa sur la surface la plus à l'extérieur est formée par trempe thermique ou par trempe chimique sur au moins une position où une contrainte de traction générée sur la surface extérieure d'une extrémité de la portion de surface (9) de la vitre avant (2) dans un état tel que l'intérieur (10) de l'enveloppe en verre (4) qui est mis sous vide, reçoit le maximum.

14. Enveloppe (1) pour un dispositif d'affichage plat selon l'une quelconque des revendications 1 à 13, dans laquelle le diamètre extérieur maximal « d » dans une direction diagonale de la portion de surface (9) et l'épaisseur « t » du centre de la portion de surface (9) dans la vitre avant (2) répondent à une relation 0,028 ≤ t/d < 0,04.

15. Enveloppe (1) pour un dispositif d'affichage plat selon l'une quelconque des revendications 1 à 13, dans laquelle le diamètre extérieur maximal « d » dans une direction diagonale de la portion de surface (9) et l'épaisseur « t » du centre de la portion de surface (9) dans la vitre avant (2) répondent à une relation 0,003 ≤ t/d < 0,028.

16. Enveloppe (1) pour un dispositif d'affichage plat selon l'une quelconque des revendications 1 à 15, dans laquelle la vitre avant (2) et la vitre arrière (3) sont étanchées hermétiquement avec un agent d'étanchement, le rebord (5) a une portion de bride en porte-à-faux vers l'extérieur depuis l'extrémité inférieure du rebord (5) sur le côté de vitre arrière, et la largeur « w1 » de la portion de bride et la largeur de saillie maximale « w2 » de l'agent d'étanchement dans la région où l'agent d'étanchement fait saillie de la largeur de la portion de bord d'étanchement de la vitre avant, répondent à une relation « w1 » > « w2 ».

17. Enveloppe (1) pour un dispositif d'affichage plat selon l'une quelconque des revendications 1 à 16, dans laquelle une portion concave est prévue dans la vitre avant sur la position où la périphérie la plus extérieure de la portion de surface se relie à la portion de bordure.

18. Dispositif d'affichage plat, **caractérisé en ce qu'**il comprend un émetteur du type cathode froide et l'enveloppe (1) pour un dispositif d'affichage plat telle qu'elle est définie dans l'une quelconque des revendications 1 à 17.
